# EUROPEAN PATENT APPLICATION

(11) **EP 3 504 984 A1**
(43) Date of publication of application: **03.07.2019**
(21) Application number: 17210997.7
(22) Date of filing: 28.12.2017
(51) Int. Cl.: A23L 3/005, A47J 37/04, A23L 3/02, A23L 3/04

(54) **A THERMAL TREATMENT MACHINE AND A RELATED METHOD**

(71) Applicant: Gebo Packaging Solutions Italy SRL, 43126 Parma (IT)
(72) Inventor: SOLFA, Andrea, 37139 VERONA (IT)
(74) Representative: Sidel Group

(57) **Abstract**

There is disclosed a thermal treatment machine (1) for carrying out a thermal treatment on an edible product contained in a plurality of first and second articles (2a; 2b), comprising: a single frame (19); a first conveying line (10a) for conveying first articles (2a) along a first thermal treatment path (P1); and a second conveying line (10b) for conveying second articles along a second thermal treatment path (P2); first conveying line (10a) and second conveying line (10b) are side by side arranged and may be driven independently from one another.

## Description

The present invention relates to a thermal treatment machine for carrying out a thermal treatment on an edible product contained in a plurality of articles.

The present invention also relates to a method for carrying out a thermal treatment on an edible product contained in a plurality of articles.

The present invention also relates to a method for retrofitting an existing thermal treatment machine for carrying out a thermal treatment on an edible product contained in a plurality of articles.

As is known, many pourable edible products comprising not only edible products like milk, fruit juice or beverages are sold in articles having different shape and dimension.

These articles are typically made within bottling lines, which comprise a plurality of machines for carrying out respective operations on the articles.

Very briefly, the bottling line comprises at least one rinsing machine for rinsing the articles, a filling unit for filling the articles with a pourable edible product, a capping unit for capping the articles and a labelling unit for applying a plurality of labels on the respective articles.

The bottling line also comprises a pasteurizing machine generally interposed between the capping unit and the labelling unit.

The pasteurizing machine is adapted to heat treating the edible product contained in the filled and capped articles by creating a heat exchange with a processing liquid, e.g. water, at a controlled temperature on them.

Known pasteurizing machines comprise:
- a plurality of conveyors for conveying respective groups of articles at a constant speed along a straight path; and
- a plurality of thermal processing zones, through which each conveyor advances the respective group of articles.

The thermal processing zones usually comprise: a heating zone in which the product temperature of the edible product inside the articles is gradually raised; a heat-treatment zone in which the edible product temperature is brought to, and kept at, a pasteurising temperature for a desired time interval; and a cooling zone in which the edible product temperature is gradually lowered down to a desired output temperature.

As the articles advance on the conveyors, the temperature of the edible product follows a temperature profile with respect to the position of the article inside the tunnel. The temperature profile basically comprises an ascending portion in the heating zone, a substantially constant portion in the heat treatment zone, and a descending portion in the cooling zone.

At the end of the temperature processing (i.e. at the output of the pasteuriser), the edible products must have been kept above a predetermined temperature for at least a predetermined time, so as to have accumulated at least a predetermined quantity of pasteurisation units (PUs). In this way, the effective pasteurisation of the processed edible product may be assured.

A need is felt within the industry to serve with the same pasteurizing machine two or more conveying lines advancing respective groups of articles, while preserving the highest degree of flexibility of the machine as regards the advancing speed of each conveying line and the temperature profile that can be applied to the edible products contained in the articles of the conveying lines.

A need is also felt to dedicate different areas to the respective group of articles travelling on respective conveying lines, so as to increase the flexibility of the pasteurizing machine.

Furthermore, a need is felt within the industry to reduce the overall size of the pasteurizing machine, and/or to render as easy and economic as possible the cleaning operation of the pasteurizing machine, and/or to render as cheap as possible the manufacturing and the maintenance of the machine.

Finally, a need is felt within the industry to easily and cost-effectively retrofit an existing pasteurizing machine, with the aim of rendering it suitable for serving two or more conveying lines.

It is an object of the present invention to provide a thermal treatment machine for carrying out a thermal treatment on an edible product contained in a plurality of articles, which meets the above-identified need.

The aforementioned object is achieved by the present invention as it relates to a thermal treatment machine for carrying out a thermal treatment on an edible product contained in a plurality of articles, as claimed in claim 1.

The invention also relates to a method for thermally treating an edible product contained in a plurality of articles, as claimed in claim 10.

The present invention also relates to a method for retrofitting an existing thermal treatment machine for carrying out a thermal treatment process on an edible product contained in a plurality of articles, as claimed in claim 16.

Two embodiments are hereinafter disclosed for a better understanding of the present invention, by way of non-limitative example and with reference to the accompanying drawings, in which:
- Figure 1 is a perspective view in of a first embodiment of the thermal treatment machine in accordance with the invention, in a pasteurizer configuration with parts removed for clarity;
- Figure 2 is a perspective view of the thermal treatment machine of Figure 1, with parts removed for clarity;
- Figure 3 is an exploded perspective view of the thermal treatment machine of Figures 1 and 2;
- Figure 4 is a lateral view in enlarged scale of the thermal treatment machine of Figures 1 to 3, with parts removed for clarity;
- Figure 5 is a top schematic view of the thermal treatment machine of Figures 1 to 4;
- Figure 6 is a top schematic view of a second embodiment of thermal treatment machine of Figures 1 to 5; and
- Figure 7 is a schematic view of the layout of thermal treatment machine of Figures 1 to 5.

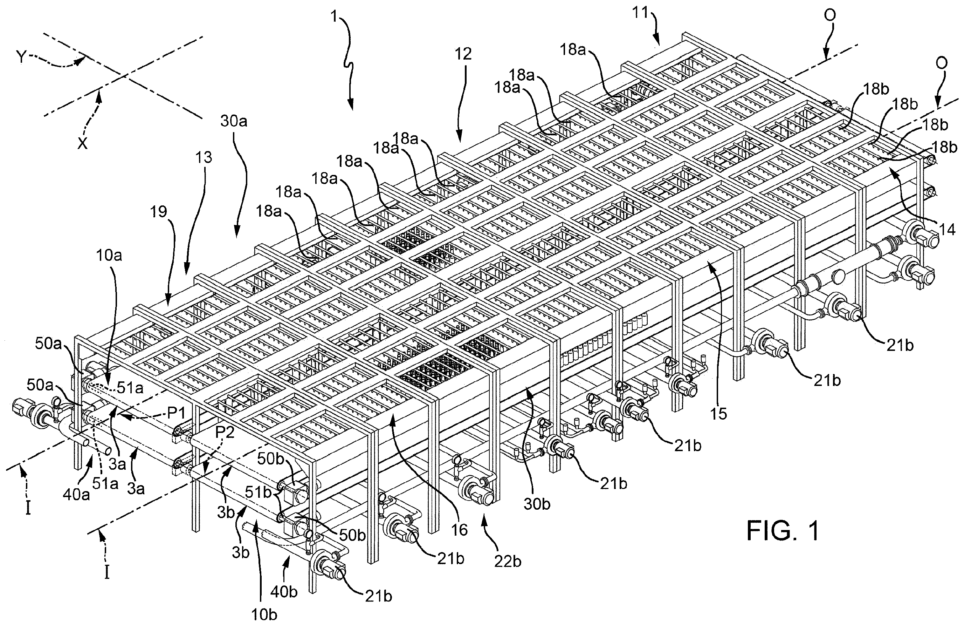

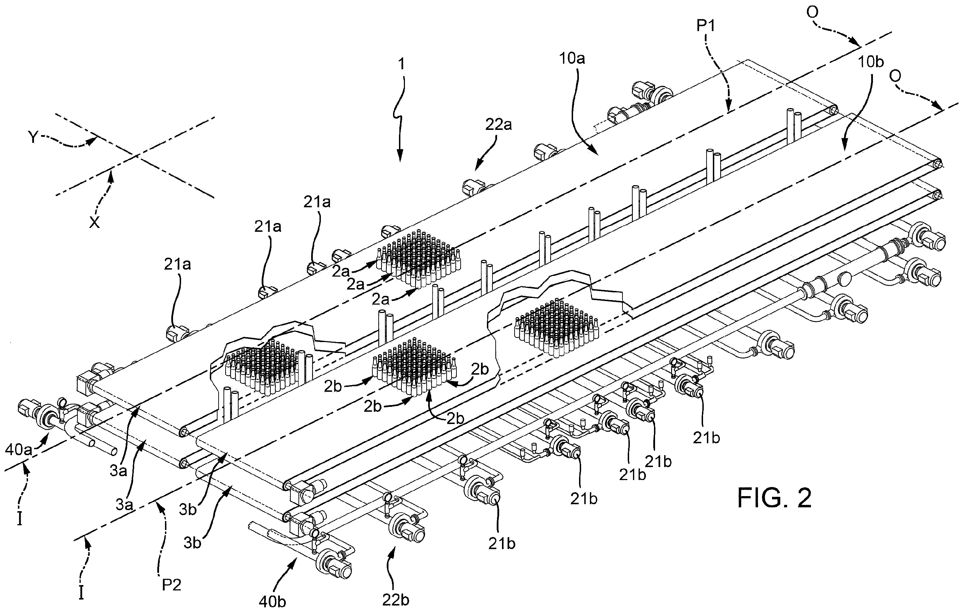

With reference to Figures 1 and 2, numeral 1 indicates as a whole a thermal treatment machine for carrying out a thermal treatment on the edible product contained inside a plurality of articles 2a, 2b.

The thermal treatment can be a warming up, a cooling down or a substantially constant temperature process of the edible product or an arbitrary combination of these steps.

Without any loss of generality, thermal treatment machine 1 is, in the embodiment shown, a tunnel pasteurizing machine for carrying out a pasteurization of the edible product contained inside a plurality of articles 2a, 2b.

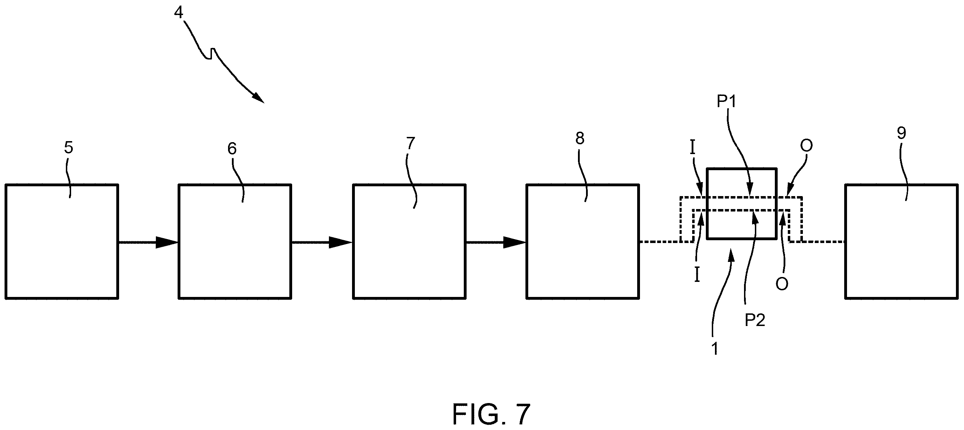

Tunnel pasteurizing machine 1 is adapted to be incorporated in a bottling line 4 (shown only schematically in Figure 7) for producing a plurality of filled, capped and possibly labelled articles 2a, 2b.

In greater detail, bottling line 4 substantially comprises:
- a collecting unit 5 for receiving articles 2a, 2b e.g. glass articles;
- possibly a rinsing unit 6 for rising the articles 2a, 2b;
- a filling unit 7 for filling the articles 2a, 2b with the pourable edible product;
- a capping unit 8 for applying a plurality of caps onto respective article 2a, 2b; and
- a labelling unit 9 for labelling the articles 2a, 2b with respective labels.

Preferably, pasteurizing machine 1 is interposed between capping unit 8 and labelling unit 9, proceeding according the advancing direction of articles 2a, 2b inside bottling line 4.

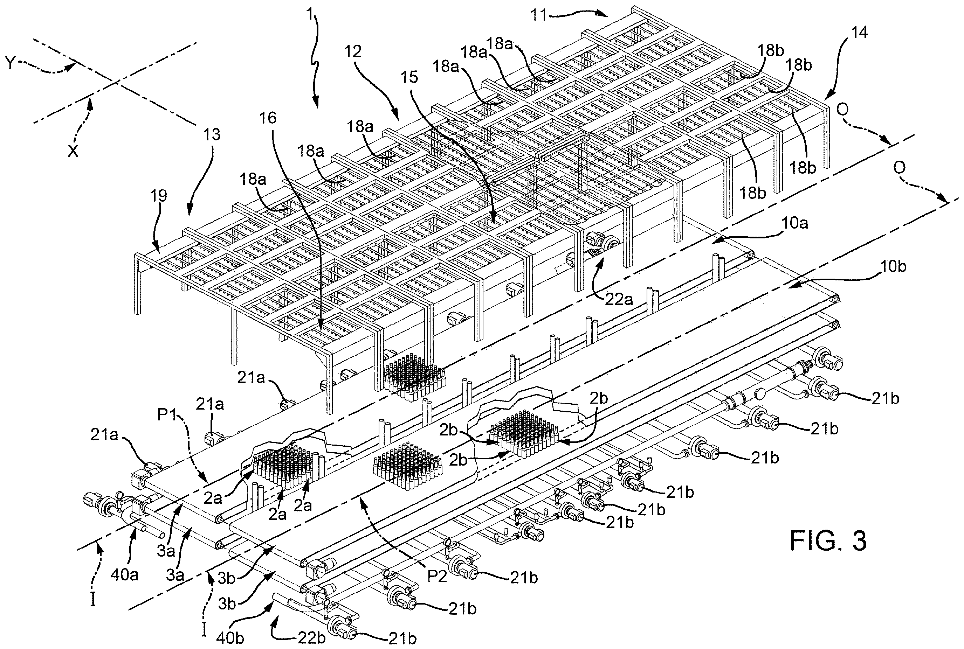

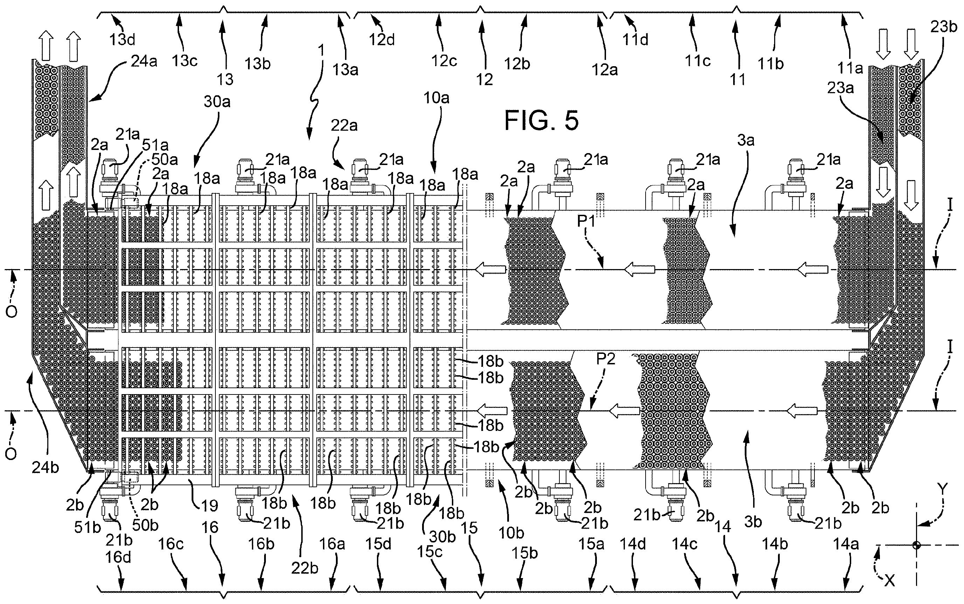

Pasteurizing machine 1 substantially comprises (Figures 1 to 3) :
- a frame 19;
- a pair of conveying groups 10a, 10b for advancing respective groups of articles 2a, 2b along respective thermal treatment path P1, P2; and
- a plurality of thermal zones 11, 12, 13; 14, 15, 16 (only schematically shown in Figure 5), which are adapted to carry out the thermal treatment on the edible product contained in articles 2a, 2b travelling along path P1, P2.

Articles 2a, 2b can be different in size from one another. The edible product contained inside articles 2a, 2b can be different from one another and can be subjected to thermal treatment different from one another.

In particular, each conveying group 10a, 10b may comprise a plurality, two in the embodiment shown, of superimposed conveyors 3a, 3b which define respective superimposed decks of thermal treatment machine 1.

In the embodiment shown, input and output stations I, O are arranged on respective opposite sides of pasteurizing machine 1.

Conveying lines 10a, 10b are fed by relative in-feed conveyors 23a, 23b with respective groups of articles 2a, 2b to be thermally treated and outputs respective groups of thermally treated articles 2a, 2b to respective out-feed conveyors 24a, 24b.

In particular, pasteurizing machine 1 has a main extension parallel to a direction X.

Direction X is parallel to the advancing direction of articles 2a, 2b from respective inlet stations I to outlet stations O.

Thermal zones 11, 12, 13; 14, 15, 16 comprises heating zones 11, 14, heat treatment zone 12; 15 and cooling zones 13; 16 positioned one after another along respective paths P1, P2.

Still more precisely, the temperature of the edible product follows a temperature profile as articles 2a, 2b advance along path P1, P2.

In particular, the edible product inside articles 2a, 2b is progressively warmed up inside heating zone 11, 14, is kept at a substantially constant value inside heat treatment zone 12, 15 and finally progressively cooled down inside cooling zone 13, 16.

Furthermore, the edible product inside articles 2a, 2b undergoes a pasteurization process inside heat treatment zone 12, 15.

In this way, the edible product gains a certain amount of pasteurization unit PU depending on the amount of time during which it remains at given levels of temperature.

With reference to Figure 1 to 5, each heating zone 11, 14, heat treatment zone 12, 15 and cooling down zone 13, 16 is provided with respective rows of injecting elements 18a, 18b for injecting a processing fluid (for example water) onto respective articles 2a, 2b advancing along respective paths P1, P2 in the same thermal zone.

Advantageously, conveying lines 10a, 10b are arranged side by side and are driven independently from another.

In particular, conveying lines 10a, 10b are arranged side by side along a direction Y, orthogonal to direction X and arranged, in use, horizontal.

Furthermore, each conveying line 10a, 10b comprises its own motor 50a, 50b, driving its respective conveyor 3a, 3b, and also preferably comprises a respective plurality of transmission groups 51a, 51b interposed between the respective motor 50a and conveyors 3a, 3b.

Motors 50a, 50b are controlled independently of one another and transmission groups 51a, 51b are physically distinct from one another.

Motors 50a, 50b may, in one embodiment, be configured as a motor and a reducing gear integrated with one another.In the embodiment shown, rows of injecting elements 18a, 18b are aligned parallel to direction Y.

Frame 19 is common to a tunnel 30a housing conveying line 10a and injecting elements 18a and to a tunnel 30b housing conveying line 10b and injecting elements 15b.

In particular, tunnels 30a, 30b are arranged side by side along direction Y.

Each one of the heating, heat treatment and cooling zones 11, 14; 12, 15; 13, 16 is further divided into a number of sub-zones positioned one after another along path P; in the exemplary embodiment shown in Figure 5, heating zone 11; 14 is divided into four sub-zones 11a-11d; 14a-14, the heat treatment zone 12; 15 is divided into three respective sub-zones 12a-12c; 15a-15c and cooling zone 13; 16 is divided into four respective sub-zones 13a-13d; 16a-16d.

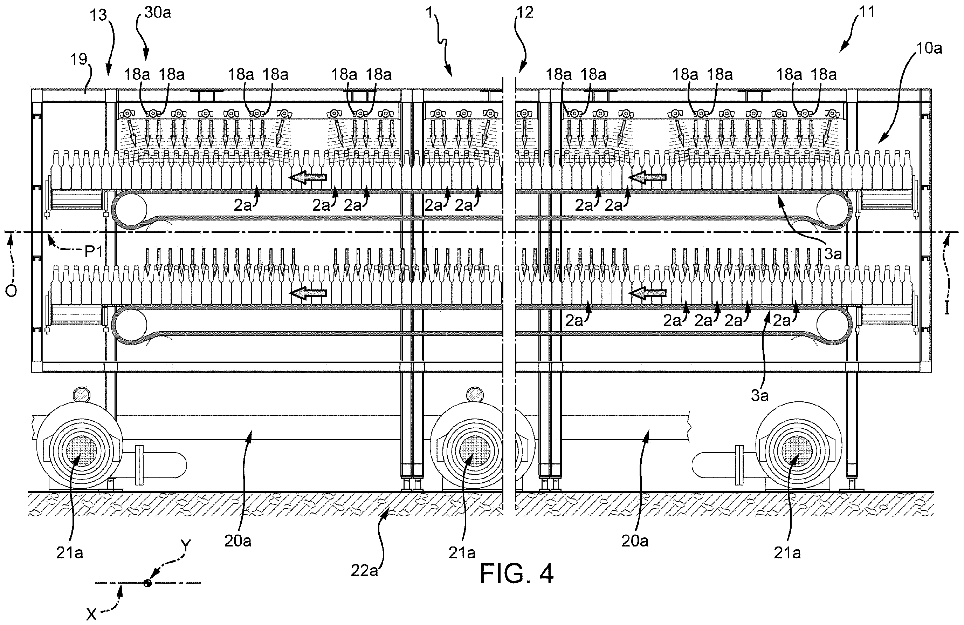

Each one of the above sub-zones 11a-11d; 12a-12c; 13a-13d; 14a-14d; 15a-15c; 16a-16d is provided with a respective group of injecting elements 18a; 18b for injecting the processing fluid at a respective temperature onto articles 2a; 2b that are travelling sub-zones 11a-11d; 12a-12c; 13a-13d; 14a-14d; 15a-15c; 16a-16d and with a respective collecting element 20a, 20b (shown in Figure 4), e.g. a tank, for collecting the processing fluid after it has been injected on the articles 2a, 2b, i.e. after it has exchanged heat with the same articles 2a, 2b. In the shown embodiment, injecting elements 18a, 18b and the collecting element 20a, 20b are positioned above and, respectively, below respective paths P1, P2, so as to exploit the gravity effect for the movement of the processing fluid.

In a known manner, which is not shown in detail, each sub-zone 11a-11d; 12a-12c; 13a-13d; 14a-14d; 15a-15c; 16a-16d comprises a relative fluid system 22a, 22b (only schematically shown in Figure 4) associated to each injecting element 18a, 18b for controlling injecting of the processing fluid and feeding thereof.

Fluid system 22a, 22b includes a plurality of pumps 21a, 21b, e.g. a centrifugal pump, coupled to a respective collecting element 20a, 20b, a plurality of fluid ducts 40a, 40b feeding injecting elements 18a, 18b, and not-shown regulating elements controllable to regulate the temperature of the processing fluid to be injected.

Fluid systems 22a, 22b are controlled to implement recirculation of processing fluid, so that processing fluid fed to injecting elements 18a, 18b of heating sub-zones 11a-11d; 14a-14d is taken from the collecting elements 20a, 20b of cooling sub-zones 13a-13d; 16a-16d, and the processing fluid fed to the injecting elements 18a, 18b of cooling sub-zones 13a-13d; 16a-16d is taken from the collecting elements 20a, 20b of heating sub-zones 11a-11d; 14d-14a in order to achieve an energy saving.

Fluid system 22a, 22b are also controlled to take the processing fluid sprayed by injecting elements 18a, 18b of heat treatment sub-zones 12a-12c; 15a-15c from relative collecting elements 20a, 20b, to heat up this processing fluid and to feed it again to same injecting elements 18a, 18b of heat treatment sub-zones 12a-12c.

In one embodiment, all injecting elements 18a, 18b are controlled independently of one another.

In particular, in order for them to be independent, each fluid system 22a, 22b has its own specific components, i.e. comprises its respective pump 21a, 21b; respective collecting elements 20a, 20b, respective feeding ducts 40a, 40b and respective not-shown regulating elements distinct from one another.

Furthermore, pumps 21a, 21b and regulating means are controlled independently from one another so as to feed relative injecting elements 18a, 18b with respective values of flow and temperature of the liquid which are independent of one another.

Alternatively, a first group of injecting elements 18a, 18b is controlled independently of one another and a second group of injecting elements 18a is controlled on the basis of the control of a second group of injecting elements 18b.

In this case, some of pumps 21a, 21b and/or respective collecting elements 20a, 20b and/or respective feeding ducts 40a, 40b of fluid system 22a, 22b are in common with one another.

Accordingly, the first group of injecting elements 18a is fed with a first flow of liquid at a first temperature, which is associated (equal or not) to a second flow and at a second temperature of liquid fed to the first group of injecting elements 18b.

The remaining injecting elements 18a, 18b are controlled independently of one another, as previously explained.

In the embodiment of Figure 5, pumps 21a, 21b are arranged alternatively on opposite sides of machine 1. In particular, along direction Y, conveying lines 10a are interposed between pumps 21a and conveying lines 10b, and conveying lines 10b are interposed between conveying lines 10a and pumps 21b.

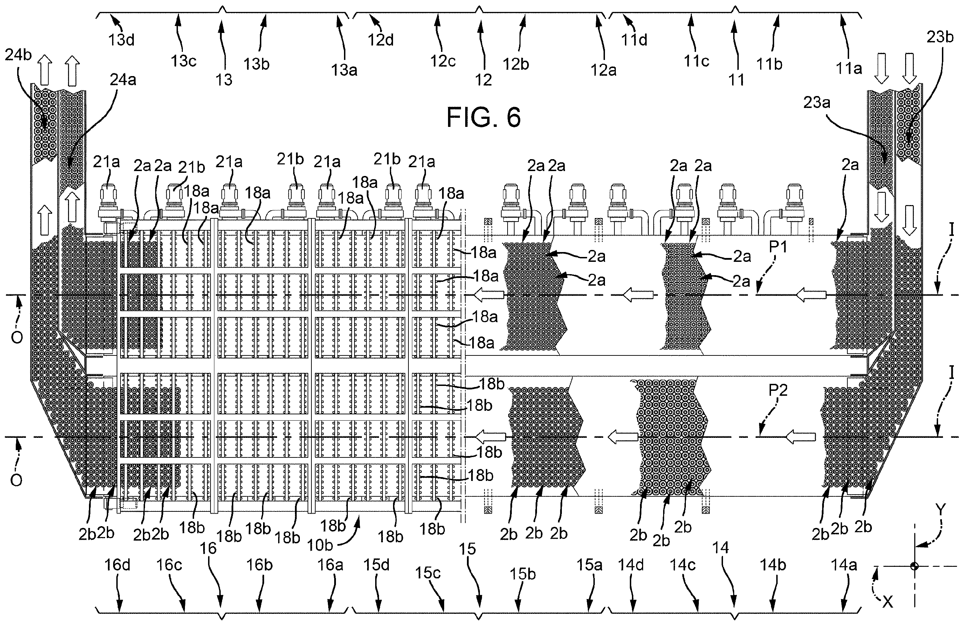

In the embodiment of Figure 6, all the pumps 21a, 21b are arranged on one side only of machine 1.

In use, conveying lines 10a, 10b advance articles 2a, 2b along respective paths P1, P2 from respective input station I to respective output station O.

Conveying lines 10a, 10b are arranged side by side along direction Y.

Conveying lines 10a, 10b are driven independently of one another.

Thus, group of articles 2a, 2b can advance at respective speeds different from one another along respective paths.

Articles 2a, 2b can be also differently shaped from one another.

As articles 2a, 2b advance along respective paths P1; P2 they pass inside respective thermal zones 11, 12, 13; 14, 15, 16.

Accordingly, articles 2a, 2b undergo a thermal treatment, as they advance along respective paths P1, P2.

In particular, due to the fact that injecting elements 18a, 18b inject processing fluid on articles 2a, 2b at different temperatures along path P1, P2, the edible product contained in these articles 2a, 2b follows a respective thermal profile.

Injecting elements 18a; 18b are controlled independently along the whole length of path P1, P2 or at least along respective portions of path P1, P2.

Accordingly, the edible product inside articles 2a, 2b follow respective thermal profiles independent from one another along the whole length of path P1, P2 or at least along respective portions of path P1, P2.

Still more precisely, as group of articles 2a, 2b travel inside heating zone 11, 14, respective injecting elements 18a, 18b inject the processing fluid onto articles 2a; 2b at progressively increasing temperatures, thus heating the edible product inside articles 2a, 2b.

As articles 2a, 2b travel inside respective heating zones 12, 15, respective injecting elements 18a, 18b inject the processing fluid onto articles 2a, 2b at a substantially constant level of temperature.

This level of temperature is high enough to pasteurize articles 2a, 2b. Accordingly, the edible product inside articles 2a, 2b gains a desired amount of pasteurization unit PU.

Finally, as articles 2a, 2b travel inside respective cooling zones 13, 16 respective injecting elements 15a, 15b inject the processing fluid onto articles 2a, 2b at progressively decreasing temperatures, thus cooling down the edible product inside articles 2a, 2b.

Pumps 21a, 21b draw processing fluid from respective collecting elements 20a, 20b and feed injecting elements 15a, 15b by means of respective fluid ducts 40.

The temperature of the processing fluid is regulated along fluid ducts 40a, 40b, so that the processing fluid can be injected by injecting elements 18a, 18b at the desired value of temperature.

In particular, the processing fluid fed to injecting elements 18a, 18b of sub-zones 11a-11d; 14a-14d of respective heating zone 11, 14 is taken from the collecting elements 20a, 20b of sub-zones 13a-13d; 16-16d of cooling zone 13, 16 and the processing fluid fed to injecting elements 15a, 15b of the sub-zones of cooling zone 13a-13d; 16a-16d is taken from collecting elements 20a, 20b of sub-zones 11a-11d; 14a-14d of heating zone 11, 14, in order to achieve an energy saving.

Furthermore, the processing fluid injected by injecting elements 18a, 18b of heat treatment sub-zones 12a-12c; 15a-15c is taken from relative collecting elements 20a, 20b, heated up and fed again to same injecting elements 18a, 18b of heat treatment sub-zones 12a-12c.

Fluid system 22a, 22b are also controlled to take the processing fluid sprayed by injecting elements 18a, 18b of heat treatment sub-zones 12a-12c; 15a-15c from relative collecting elements 20a, 20b, to heat up this processing fluid and to feed it again to same injecting elements 18a, 18b of heat treatment sub-zones 12a-12c.

Pasteurizing machine 1 can be easily formed as a retrofitting of an existing pasteurizing machine 1 having only conveying line 10a and thermal zone 11, 12, 13, by simply adding conveying line 10b and thermal zones 14, 15, 16 side by side along direction Y with respect to conveying line 10a and thermal zone 11, 12, 13.

The advantages of pasteurizing machine 1 and of the method according to the present invention will be clear from the foregoing description.

In particular, conveying lines 10a, 10b of tunnels 30a, 30b are side by side arranged along direction Y and independently from one another.

In this way, on one hand, articles 2a, 2b can be fed to pasteurizing machine 1 on respective conveying lines 10a, 10b with respective speeds and with respective start and stop sequences. Furthermore, articles 2a with a first shape and a first size can be advanced on conveying line 10a and articles 2b with a second shape and a second size can be advanced on conveying line 10b, thus ensuring a high operative flexibility to pasteurizing machine 1.

On the other hand, thanks to the fact that conveying lines 10a, 10b are side by side arranged, the previously identified high operation flexibility is achieved without increasing the overall height of pasteurizing machine 1.

Furthermore, injecting elements 18a, 18b can be controlled independently either along the whole extension of respective paths P1, P2 or along respective portions of respective paths P1, P2.

Thus, the edible product contained in articles 2a, 2b travelling on conveying lines 10a, 10b can be subjected to respective temperature profiles and undergo respective thermal treatments at least in part independent from one another.

Even, only articles 2a (or 2b) can undergo a thermal treatment process while articles 2b (or 2a) can be simply conveyed along path P2 (or P1).

Pasteurizing machine 1 is particularly easy to be maintained and cleaned because injecting elements 18a, 18b of respective tunnels 30a, 30b are side by side arranged along direction Y, thus being easily accessible by the operators.

Furthermore, being aligned along direction Y, conveying lines 10a, 10b can be conveniently arranged at the same vertical level of the in-feed conveyors 23a, 23b and out-feed conveyors 24a, 24b, thus reducing the need for costly and complex ascending and descending portion in the conveying lines of bottling line 4.

Finally, the solution according to the invention can be easily retrofitted to a pasteurizing machine having a single tunnel.

Clearly, changes may be made to pasteurizing machine 1 and to the method as described and illustrated herein without, however, departing from the scope of protection as defined in the accompanying claims.

In particular, thermal treatment machine 1 could be different from a pasteurizing machine.

Furthermore, the thermal treatment process might be carried out along only one path P1, P2.

Finally, pasteurizing machine 1 might comprise more than two conveying lines 10a, 10b side by side arranged along direction Y, and could each conveying line 10a, 10b might comprise only one or more than two superimposed respective conveyors 3a, 3b.

## Claims

1. A thermal treatment machine (1) for carrying out a thermal treatment on an edible product contained in a plurality of first and second articles (2a; 2b), comprising:
- a single frame (19);
- a first conveying line (10a) for conveying said first articles (2a) along a first path (P1); and
- at least one second conveying line (10b) for conveying second articles along a second path (P2);
at least one of said first and second path (P1, P2) being a thermal treatment path;
**characterized in that** said first conveying line (10a) and second conveying line (10b) are side by side arranged and may be driven independently from one another.

2. The thermal treatment of claim 1, **characterized in that** said first and at least one second conveying line (10a, 10b) are driven respectively by a first and at least one second motor (50a, 50b) controllable independently from one another.

3. The thermal treatment machine of claim 1 or 2, **characterized by** comprising:
- a first feeding unit (11, 12, 13, 18a) for directing a first flow of a heat transfer medium towards said first articles (2a) travelling, in use, along said path (P1); and
- a second feeding unit (14, 15, 16, 18b) for directing a second flow of a heat transfer medium towards said second articles (2b) travelling, in use, along said second path (P2) ;
both said first and at least one of second path (P1, P2) being thermal treatment paths;
said first and second feeding units (11, 12, 13, 18a; 14, 15, 16, 18b) being side by side arranged and comprising respectively at least one first group and a second group of injecting elements (18a, 18b) which may be fed with a first amount of said first flow at a first temperature and with a second amount of said second flow at a second temperature;
either said first amount being, in use, independent from said second amount and/or said first temperature being, in use, independently controlled from said second temperature.

4. The thermal treatment machine of claim 3, **characterized in that** first and second feeding units (11, 12, 13, 18a; 14, 15, 16; 18b) are controllable to feed all said first and second injecting elements (18a, 18b) with a first amount of said first flow at a first temperature and with a second amount of said second flow at a second temperature;
either said first amount being, in use, independent from said second amount and/or said first temperature being, in use, independently controlled from said second temperature.

5. The thermal treatment machine of any one of the foregoing claims, **characterized in that** said first conveying line (10a) and second conveying line (10b) are side by side arranged along a direction (Y) transversal to said first and second path (P1, P2) and arranged, in use, horizontally.

6. The thermal treatment machine of any one of claims 2 to 5, **characterized by** comprising:
- a first tunnel (30a), which houses said first conveying line (10a) and said first feeding unit (11, 12, 13, 18a); and
- a second tunnel (30b), which houses said second conveying line (10b) and said second feeding unit (14, 15, 16, 18b);
said first and second tunnel (30a, 30b) being side by side arranged.

7. The thermal treatment machine according to any one of the foregoing claims, **characterized in that** at least one of said first or second feeding unit (11, 12, 13, 18a; 14, 15, 16, 18b) is configured to pasteurize respective said first or second articles (2a, 2b).

8. The thermal treatment machine according to any one of the foregoing claims, **characterized by** comprising:
- first collecting means (20a) for collecting the heat transfer medium that has, in use, exchanged heat with said first articles (2a);
- first pumping means (21a) coupled to respective first collecting means (20a) and adapted to recirculate said heat transfer medium from said first collecting means (20a) towards said first feeding unit (11, 12, 13, 18a);
- second collecting means (20b) for collecting the heat transfer medium that has, in use, exchanged heat with said first articles (2b); and
- second pumping means (21b) coupled to respective second collecting means (20b) and adapted to recirculate said heat transfer medium from said second collecting means (20b) towards said second feeding unit (14, 15, 16, 18b);
said first and second pumping means (21a, 21b) being controllable independently from one another.

9. The thermal machine of claim 8, **characterized in that** said first pumping means (21a) are arranged on a first lateral side of said machine (1), and said second pumping means (21b) are arranged on a second lateral side, which is either opposite or identical to said first lateral side of said machine (1).

10. A method for thermal treating the edible product contained in a plurality of first and second articles (2a, 2b) comprising the steps of:
i) conveying said first articles (2a) on a first conveying line (10a) and along a first path (P1);
ii) conveying said second articles (2b) on at least one second conveying line (10b) and along a second path (P2); and
iii) carrying out a thermal treatment operation along at least one of said first and second path (P1, P2);
**characterized by** comprising a step iv) of driving said first and second conveying lines (10a, 10b) independently from one another; said first and second conveying lines (10a, 10b) being side by side arranged.

11. The method of claim 10, **characterized in that** said step iv) comprises the step of controlling independently of one another a first and at least one second motor (50a, 50b) for driving respectively said first conveying line (10a) and at least one said second conveying line (10b).

12. The method of claim 10 or 11, **characterized by** comprising the steps of:
v) directing a first flow of a heat transfer medium towards said first articles (2a) during said step i), by means of first injecting elements (18a) of a first feeding unit (11, 12, 13, 18a);
vi) directing a second flow of said heat transfer medium towards said second articles (2b) during said step ii), by means of second injecting elements (18b) of a second feeding unit (14, 15, 16, 18b); and
vii) feeding at least one group of said first injectors (18a) with a first amount of said first flow at a first temperature, and at least one group of said second injectors (18b) with a second amount of said second flow at a second temperature;
either said first amount being, in use, independent from said second amount; and/or said first temperature being, in use, independently controlled from said second temperature;
both said first and at least one of second path (P1, P2) being thermal treatment paths.

13. The method of claim 12, **characterized in that** said step vii) comprises a step viii) of feeding all said first injectors (18a) with said first amount of said first flow at said first temperature, and feeding all said second injectors (18b) with said second amount of said second flow at said second temperature.

14. The method of claim 12 or 131, **characterized in that** at least one of said step v) and vi) comprises a step ix) of pasteurizing respective first and/or second articles (2a, 2b).

15. The method of any one of claims 12 to 14, **characterized by** comprising the steps of:
x) collecting the heat transfer medium that has exchanged heat with said first and second articles (2a, 2b);
xi) recirculating said heat transfer medium towards said first feeding unit (11, 12, 13, 18a) by means of first pumping means (21a); and
xii) recirculating said heat transfer medium towards said second feeding unit (14, 15, 16, 18b) by means of second pumping means (21b);
xiii) controlling said first and second pumping means (21a, 21b) independently of one another;
either said first pumping means (21a) being arranged on a first lateral side of said machine (1), and said second pumping means (21b) being arranged on a second lateral side, opposite to said first lateral side, of said machine (1); or said first pumping means (21a) and said second pumping means (21b) being arranged on the same first or second lateral side of said machine (1).

16. A method for retrofitting an existing thermal treatment machine for carrying out a thermal treatment process on an edible product contained in a plurality of articles (2a, 2b); said existing thermal treatment machine comprising at least one first conveying line (10a) for conveying said first articles (2a) along a first path (P1); **characterized by** comprising the steps of:
a) adding at least one second conveying line (10b) along a second path (P2) side by side with respect to a first conveying (10a) along a direction (Y) transversal to said first path (P1, P2) and arranged horizontally;
b) conveying said second articles (2b) on at least one said second conveying line (10b) and along a second path (P2) ;
c) driving said first and second conveying lines (10a, 10b) independently of one another; and
d) carrying out a thermal treatment operation along at least one of said first and second path (P1, P2).
